# EUROPÄISCHE PATENTANMELDUNG

(11) **EP 2 685 330 A1**
(43) Veröffentlichungstag der Anmeldung: **15.01.2014**
(21) Anmeldenummer: 12176357.7
(22) Anmeldetag: 13.07.2012
(51) Int. Cl.: G05B 19/05, G06F 13/40

(54) **Verfahren zum Datenaustausch in einem Automatisierungssystem und Automatisierungssystem**

(71) Anmelder: Siemens Aktiengesellschaft, 80333 München (DE)
(72) Erfinder: Bodenschatz, Markus, 09337 Hohenstein-Ernstthal (DE); Ramm, Enrico, 09117 Chemnitz (DE)

(57) **Zusammenfassung**

Die Erfindung betrifft ein Verfahren zum Datenaustausch in einem Automatisierungssystem, wobei das Automatisierungssystem
- ein Automatisierungsgerät (1),
- ein Hauptmodul (2) und
- eine Mehrzahl an Untermodulen (11,12,13) umfasst,
wobei die Untermodule (11,12,13) über einen Untermodulbus (3) miteinander in Verbindung stehen und das Automatisierungsgerät (1) über einen Feldbus (4) mit dem Hauptmodul (2) in Verbindung steht, dabei bestehen zwischen den einzelnen Untermodulen (11,12,13) und dem Hauptmodul (2) zugeordnete Kommunikationsbeziehungen (11a,12a,13a) zum Datenaustausch und bei einem Abkoppeln eines Untermoduls (11,12,13) bzw. bei einem Ankoppeln eines Untermoduls (11,12,13) von dem bzw. an den Untermodulbus (3) wird nach einem Datenlesezugriff des Hautmoduls (2) über die Kommunikationsbeziehung (11a,12a,13a) verfahrensgemäß ein Alarmschwall vermieden.

## Beschreibung

Die Erfindung betrifft ein Verfahren zum Datenaustausch in einem Automatisierungssystem, wobei das Automatisierungssystem ein Automatisierungsgerät, ein Hauptmodul und eine Mehrzahl an Untermodulen umfasst, wobei die Untermodule über einen Untermodulbus miteinander in Verbindung stehen und das Automatisierungsgerät über einen Feldbus mit dem Hauptmodul in Verbindung steht, dabei bestehen zwischen den einzelnen Untermodulen und dem Hauptmodul zugeordnete Kommunikationsbeziehungen zum Datenaustausch und bei einem Abkoppeln eines Untermoduls bzw. bei einen Ankoppeln eines Untermoduls von dem bzw. an dem Untermodulbus wird ein Systemereignis vom Hauptmodul erzeugt.

Im Sinne der Erfindung wird unter Abkoppeln bzw. Ankoppeln eines Untermoduls an den bzw. von den Untermodulbus ein Ziehen und Stecken von Baugruppen innerhalb eines I/O-Devices einer dezentralen Peripherie verstanden. Demnach erzeugt ein I/O-Device, welches als Hauptmodul gesehen werden kann, ein Ziehenalarm bzw. ein Steckenalarm. Für derartige Baugruppen eines Peripheriesystems wird nun eine Möglichkeit gesucht einen Alarmschwall bei Ausfall oder einer Störung eines Peripheriebusses oder Untermodulbusses zu verhindern. Desweiteren ist es wünschenswert für eine durchgängige Diagnostizierbarkeit des I/O-Devices Verbindungsabbrüche von Kommunikationsbeziehungen zwischen I/O-Controllern und I/O-Devices zu minimieren. Eine bestehende Kommunikationsbeziehung auch AR = Application Relationship genannt, zwischen einem Untermodul und dem Hauptmodul soll also nach Möglichkeit nicht zu oft unterbrochen werden.

Um einen Alarmschwall zu verhindern, wurde bei einem Ausfall eines Peripheriebusses oder eines Untermodulbusses eine Kommunikationsbeziehung zwischen dem Untermodul und dem Hauptmodul "Abgeworfen". Nach dem "Abwurf" der Kommunikationsbeziehung ist das Untermodul in diesen Zustand nicht mehr diagnostizierbar. Deshalb wurde eine bestehende Kommunikationsbeziehung bei einem Wiederaufnahmeversuch des Hauptmoduls angenommen, jedoch wurden alle angeforderten Untermodule mit einem Attribut Superordinated Lock (übergeordnet nicht zugreifbar) versehen. Da dieses Attribut nicht bei einer aktiven Kommunikationsbeziehung gesetzt und gelöscht werden kann, muss bei einer Wiederkehr der Funktionalität des Untermodulbusses die Kommunikationsbeziehung zum zweiten Mal "Abgeworfen" werden und das Hauptmodul bzw. die Untermodule können anschließend ohne das Attribut Superordinated Lock wieder ordnungsgemäß Anlaufen. Ein Nachteil dieser Lösung ist es, das bei Ziehen- und Steckenalarmen die Station bestehend aus Hauptmodul und Untermodulen zweimal ausfällt.

Es ist daher die Aufgabe der Erfindung ein Verfahren bereitzustellen, welches es ermöglicht einen Abbruch von Kommunikationsbeziehungen zu minimieren.

Bei dem Verfahren mit der Merkmalskombination des Oberbegriffes des Anspruchs 1 wird die Aufgabe dadurch gelöst, dass das Erzeugen des Systemereignisses folgende Schritte aufweist; einem Datenstatus eines jeden Untermoduls wird vom Hauptmodul auf einen ersten Eigenschaftswert gestellt, der erste Eigenschaftswert wird in den Untermodulen ausgewertet, woraufhin die Untermodule eine Fehlermeldung bezüglich des Untermodulbusses an das Hauptmodul senden, ein Datenlesezugriff des Hauptmoduls über die jeweilige Kommunikationsbeziehung löst einen Untermodulzugriffsfehler aus, dabei werden die zugeordneten Kommunikationsbeziehungen aufrechterhalten, bei einem erneuten Ankoppeln bzw. Abkoppeln eines Untermoduls werden die Kommunikationsbeziehungen abgebaut, nach vollständigem Abbau aller Kommunikationsbeziehungen werden die Untermodule neu gestartet, dabei wird der Datenstatus eines jeden Untermoduls auf einen zweiten Eigenschaftswert gestellt, der zweite Eigenschaftswert wird in den Untermodulen ausgewertet, worauf die Untermodule ihren Datenaustausch mit dem Hauptmodul fortsetzen. Im Sinne der Erfindung wird unter An- bzw. Abkoppeln ein Ziehen- und Stecken-Alarm bzw. ein Pull- und Plug-Alarm verstanden. Pull- und Plug-Alarme treten im Zusammenhang mit modularen I/O-Devices auf, wenn ein Modul gezogen bzw. gesteckt wird. Derartige Peripheriezugriffsfehler können beispielsweise durch nach dem Profinet I/O-Protokoll definierten Nutzdatenbegleitern (IOPS und IOCS) aufgedeckt werden. Eine überlagerte Steuerung bzw. ein Hauptmodul erhält dadurch Informationen über Zugriffsprobleme in einer unterlagerten Peripherie. Mit dem bisherigen Verfahren musste die Kommunikationsbeziehung zweimal abgebaut werden, da dass Untermodul Attribut Superordinated Lock nur bei einem Aufbau einer Kommunikationsbeziehung gesetzt werden kann. Durch das neue Verfahren ist nur noch eine Unterbrechung einer Kommunikationsbeziehung notwendig und damit auch nur ein Stationsausfall notwendig.

Damit ein Anwender von den übergeordneten Automatisierungsgerät nur noch einen einzigen Alarm bei einem Ausfall des Untermodulbusses erhält, wird durch das Hauptmodul das Systemereignis, die Fehlermeldung und/oder der Untermodulzugriffsfehler an das Automatisierungsgerät über den Feldbus weitergeleitet und in dem Automatisierungsgerät werden die Fehler zusammen in einen Anwenderprogramm ausgewertet.

Durch das Aufrechterhalten der Kommunikationsbeziehung während der Zeitdauer, welche zwischen einem Zeitpunkt für das Abkoppeln und einem Zeitpunkt für das wieder Ankoppeln liegt, wird ein Alarmschwall im Automatisierungsgerät verhindert.

Vorteilhafter Weise wird für den Feldbus ein auf einer Ethernet-Technologie basierender Bus genutzt, welcher dass TCP/IP-Protokoll nutzt.

In jedem Untermodul werden mögliche Ausgabedaten für Ausgänge des Untermoduls, welche in einen industriellen Prozess führen, auf einen sicheren Ausgabe-Wert eingestellt.

Die eingangs genannte Aufgabe wird auch durch ein Automatisierungssystem, umfassend ein Automatisierungsgerät, ein Hauptmodul und eine Mehrzahl an Untermodulen gelöst.

Die Untermodule stehen dabei über einen Untermodulbus miteinander in Verbindung und das Automatisierungsgerät ist über einen Feldbus mit dem Hauptmodul verbunden. Zwischen den Untermodulen und dem Hauptmodul bestehen einzelne Kommunikationsbeziehungen zum Datenaustausch von Daten vom Hauptmodul zu den Untermodulen und umgekehrt. Das Hauptmodul weist eine Überwachungseinheit auf, welche ausgestaltet ist bei einem Abkoppeln eines Untermoduls bzw. bei einen Ankoppeln eines Untermoduls von dem bzw. an den Untermodulbus dieses zu Erkennen und ein Systemereignis zu erzeugen.

Um einen Alarmschwall zu verhindern ist die Überwachungseinheit dazu ausgestaltet einen Datenstatus eines jeden Untermoduls auf einen ersten Eigenschaftswert zu stellen, weiterhin sind die Untermodule ausgestaltet, den ersten Eigenschaftswert auszuwerten und eine Fehlermeldung bezüglich des Untermodulbusses an das Hauptmodul zu senden, weiterhin ist das Hauptmodul ausgestaltet aufgrund des ersten Eigenschaftswertes in den Untermodulen bei einem Datenlesezugriffs des Hauptmoduls über die jeweilige Kommunikationsbeziehung einen Untermodulzugriffsfehler auszulösen, dabei werden die zugeordneten Kommunikationsbeziehungen aufrecht gehalten, weiterhin ist das Hauptmodul dazu ausgestaltet, bei einem erneuten Ankoppeln bzw. Abkoppeln eines Untermoduls von dem Untermodulbus die Kommunikationsbeziehungen abzubauen und nach einem vollständigem Abbau aller Kommunikationsbeziehungen die Untermodule neu zu starten und dabei den Datenstatus eines jeden Untermoduls auf einen zweiten Eigenschaftswert zu stellen, weiterhin sind die Untermodule ausgestaltet den zweiten Eigenschaftswert in den Untermodulen auszuwerten, und daraufhin ihren Datenaustausch mit dem Hauptmodul fortzusetzen.

Durch das Aufrechterhalten der Kommunikationsbeziehungen während der Zeitdauer, welche zwischen einen Zeitpunkt für das Abkoppeln und einen Zeitpunkt für das wieder Ankoppeln liegt, wird ein Alarmschwall in dem Automatisierungsgerät verhindert.

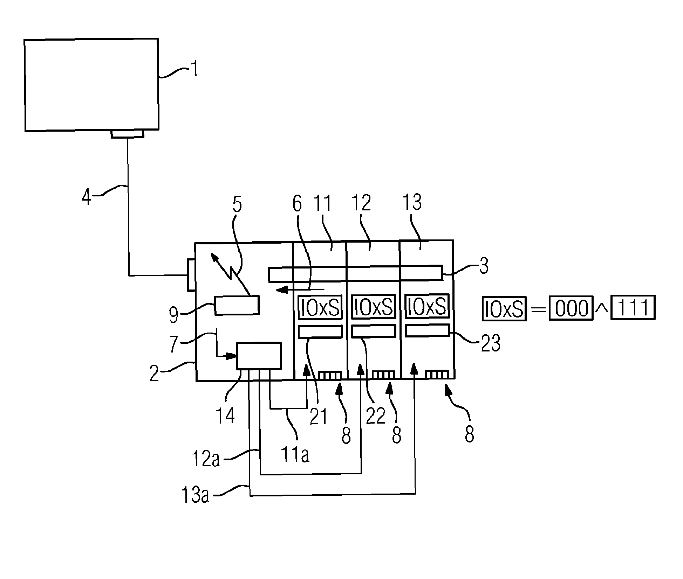

Die Zeichnung zeigt mit der Figur ein Ausführungsbeispiel eines Automatisierungssystems.

Gemäß der Figur ist ein Automatisierungssystem umfassend ein Automatisierungsgerät 1, ein Hauptmodul 2 und ein erstes Untermodul 11, ein zweites Untermodul 12 und ein drittes Untermodul 13 dargestellt. Die Untermodule 11,12,13 sind über einen Untermodulbus 3 mit dem Hauptmodul 2 verbunden. In dem Hauptmodul 2 ist ein Koordinatorbaustein 14 angeordnet, welcher mit einer ersten Kommunikationsbeziehung 11a, einer zweiten Kommunikationsbeziehung 12a und einer dritten Kommunikationsbeziehung 13a parametriert ist. Das Automatisierungsgerät 1 kann über einen Feldbus 4 Daten mit dem Hauptmodul 2 austauschen, wobei wiederum die Untermodule 11,12,13 über Ausgänge 8 mit Signalleitungen eines zu automatisierenden Prozesses verbunden sind. Diese Daten, welche über die Ausgänge 8 an die Untermodule 11,12,13 gelangen, können über den Untermodulbus 3 in das Hauptmodul 2 geführt werden und weiterhin über den Feldbus 4 zu dem Automatisierungsgerät 1 gesendet werden.

Das Hauptmodul 2 weist eine Überwachungseinheit 9 auf, welche ausgestaltet ist bei einem Abkoppeln eines Untermoduls 11,12,13 bzw. bei einem Ankoppeln eines Untermoduls 11,12,13 von dem bzw. an den Untermodulbus 3 dieses als ein Peripheriezugriffsfehler zu erkennen und ein Systemereignis 5 zu erzeugen.

Die Überwachungseinheit 9 ist weiterhin dazu ausgestaltet, einen Datenstatus IOxS eines jeden Untermoduls 11,12,13 auf einen ersten Eigenschaftswert 000 zu stellen, wobei weiterhin die Untermodule 11,12,13 dazu ausgestaltet sind, den ersten Eigenschaftswert 000 auszuwerten und eine Fehlermeldung 6 bezüglich des Untermodulbusses 3 an das Hauptmodul 2 zu senden. Das Hauptmodul 2 ist weiterhin dazu ausgestaltet, aufgrund des ersten Eigenschaftswertes 000 in den Untermodulen 11,12,13 bei einem Datenlesezugriff des Hauptmoduls 2 über die jeweilige Kommunikationsbeziehung 11a,12a,13a einen Untermodulzugriffsfehler 7 auszulösen.

Erfindungsgemäß werden nun aber nach einem Untermodulzugriffsfehler 7 die zugeordneten Kommunikationsbeziehungen 11a,12a,13a aufrecht gehalten um einen späteren Alarmschwall in einem Anwenderprogramm in dem Automatisierungsgerät 1 zu verhindern.

Bei einem erneuten Ankoppeln bzw. Abkoppeln eines Untermoduls 11,12,13 von dem Untermodulbus werden die Kommunikationsbeziehungen 11a,12a,13a abgebaut und nach einem vollständigem Abbau aller Kommunikationsbeziehungen 11a,12a,13a werden die Untermodule 11,12,13 über das Hauptmodul 2 neu gestartet und dabei wird der Datenstatus IOxS eines jeden Untermoduls 11,12,13 auf einen zweiten Eigenschaftswert 111 gestellt. Die Untermodule 11,12,13 sind dabei dazu ausgestaltet den zweiten Eigenschaftswert 111 in den Untermodulen 11,12,13 auszuwerten und daraufhin ihren Datenaustausch mit dem Hauptmodul 2 fortzusetzen.

Zur Auswertung des Datenstatus IOxS weist jedes Untermodul 11,12,13 je eine Auswerteeinheit, nämlich eine erste Auswerteeinheit 21, eine zweite Auswerteeinheit 22 und eine dritte Auswerteeinheit 13 auf.

## Patentansprüche

1. Verfahren zum Datenaustausch in einem Automatisierungssystem, wobei das Automatisierungssystem
- ein Automatisierungsgerät (1),
- ein Hauptmodul (2) und
- eine Mehrzahl an Untermodulen (11,12,13) umfasst,
wobei die Untermodule (11,12,13) über einen Untermodulbus (3) miteinander in Verbindung stehen und das Automatisierungsgerät (1) über einen Feldbus (4) mit dem Hauptmodul (2) in Verbindung steht, dabei bestehen zwischen den einzelnen Untermodulen (11,12,13) und dem Hauptmodul (2) zugeordnete Kommunikationsbeziehungen (11a,12a,13a) zum Datenaustausch und bei einem Abkoppeln eines Untermoduls (11,12,13) bzw. bei einem Ankoppeln eines Untermoduls (11,12,13) von dem bzw. an den Untermodulbus (3) wird ein Systemereignis (5) vom Hauptmodul (2) erzeugt,
**dadurch gekennzeichnet, dass** das Erzeugen des Systemereignisses (5) folgende Schritte aufweist:
- ein Datenstatus (IOxS) eines jeden Untermoduls (11,12,13) wird vom Hauptmodul (2) auf einen ersten Eigenschaftswert (000) gestellt,
- der erste Eigenschaftswert (000) wird in den Untermodulen (11,12,13) ausgewertet, woraufhin die Untermodule (11,12,13) eine Fehlermeldung (6) bezüglich des Untermodulbus (3) an das Hauptmodul (2) senden,
- ein Datenlesezugriff des Hautmoduls (2) über die jeweilige Kommunikationsbeziehung (11a,12a,13a) löst einen Untermodulzugriffsfehler (7) aus, dabei werden die zugeordneten Kommunikationsbeziehungen (11a,12a,13a) aufrechterhalten,
- bei einem erneuten Ankoppeln bzw. Abkoppeln eines Untermoduls (11a,12a,13a) werden die Kommunikationsbeziehungen (11a,12a,13a) abgebaut,
- nach vollständigem Abbau aller Kommunikationsbeziehungen (11a,12a,13a) werden die Untermodule (11,12,13) neu gestartet, dabei wird der Datenstatus (IOxS) eines jeden Untermoduls (11,12,13) auf einen zweiten Eigenschaftswert (111) gestellt,
- der zweite Eigenschaftswert (111) wird in den Untermodulen (11,12,13) ausgewertet, worauf die Untermodule (11,12,13) ihren Datenaustausch mit dem Hauptmodul (2) fortsetzen.

2. Verfahren nach Anspruch 1, wobei das Hauptmodul (2) das Systemereignis (5), die Fehlermeldung (6) und/oder den Untermodulzugriffsfehler (7) an das Automatisierungsgerät (1) über den Feldbus (4) weiterleitet und in dem Automatisierungsgerät (1) die Fehler in einem Anwenderprogramm ausgewertet werden.

3. Verfahren nach Anspruch 2, wodurch durch das Aufrechterhalten der Kommunikationsbeziehungen (11a,12a,13a) während der Zeitdauer, welche zwischen einem Zeitpunkt für das Abkoppeln und einem Zeitpunkt für das wieder Ankoppeln liegt, ein Alarmschwall im Automatisierungsgerät (1) verhindert wird.

4. Verfahren nach einem der Ansprüche 1 bis 3, wobei für den Feldbus (4) ein auf einer Ethernettechnologie basierender Bus genutzt wird, welcher das TCP/IP-Protokoll nutzt.

5. Verfahren nach einem der Ansprüche 1 bis 4, wobei in jedem Untermodul (11,12,13) mögliche Ausgabedaten für Ausgänge (8) des Untermoduls (11,12,13, welche in einen industriellen Prozess führen, auf einen sicheren Ausgabe-Wert eingestellt werden.

6. Automatisierungssystem, umfassend
- ein Automatisierungsgerät (1),
- ein Hauptmodul (2) und
- eine Mehrzahl an Untermodulen (11,12,13),
wobei die Untermodule (11,12,13) über einen Untermodulbus (3) miteinander in Verbindung stehen und das Automatisierungsgerät (1) über einen Feldbus (4) mit dem Hauptmodul (2) in Verbindung steht, dabei bestehen zwischen den einzelnen Untermodulen (11,12,13) und dem Hauptmodul (2) zugeordnete Kommunikationsbeziehungen (11a,12a,13a) zum Datenaustausch, wobei das Hauptmodul (2) eine Überwachungseinheit (9) aufweist, welche ausgestaltet ist bei einem Abkoppeln eines Untermoduls (11,12,13) bzw. bei einem Ankoppeln eines Untermoduls (11,12,13) von dem bzw. an den Untermodulbus (3) dieses zu erkennen und ein Systemereignis (5) zu erzeugen,
**dadurch gekennzeichnet, dass** die Überwachungseinheit (9) ausgestaltet ist einen Datenstatus (IOxS) eines jeden Untermoduls (11,12,13) auf einen ersten Eigenschaftswert (000) zu stellen,
weiterhin sind die Untermodule (11,12,13) ausgestaltet
- den ersten Eigenschaftswert (000) auszuwerten und eine Fehlermeldung (6) bezüglich des Untermodulbus (3) an das Hauptmodul (2) zu senden,
weiterhin ist das Hauptmodul (2) ausgestaltet aufgrund des ersten Eigenschaftswert (000) in den Untermodulen (11,12,13) bei einem Datenlesezugriff des Hauptmoduls (2) über die jeweilige Kommunikationsbeziehung (11a,12a,13a) einen Untermodulzugriffsfehler (7) auszulösen, dabei werden die zugeordneten Kommunikationsbeziehungen (11a,12a,13a) aufrecht gehalten,
weiterhin ist das Hauptmodul (2) ausgestaltet
- bei einem erneuten Ankoppeln bzw. Abkoppeln eines Untermoduls (11,12,13) von dem Untermodulbus (3) die Kommunikationsbeziehungen (11a,12a,13a) abzubauen
- und nach einem vollständigem Abbau aller Kommunikationsbeziehungen (11a,12a,13a) die Untermodule (11,12,13) neu zu starten und dabei den Datenstatus (IOxS) eines jeden Untermoduls (11,12,13) auf einen zweiten Eigenschaftswert (111) zu stellen,
weiterhin sind die Untermodule (11,12,13) ausgestaltet
- den zweiten Eigenschaftswert (111) in den Untermodulen (11,12,13) auszuwerten, und daraufhin ihren Datenaustausch mit dem Hauptmodul (2) fortzusetzen.
